# EUROPÄISCHE PATENTANMELDUNG

(11) **EP 4 387 386 A1**
(43) Veröffentlichungstag der Anmeldung: **19.06.2024**
(21) Anmeldenummer: 23208818.7
(22) Anmeldetag: 09.11.2023
(51) Int. Cl.: H04W 88/06, B62J 45/20

(54) **ELEKTROGERÄT MIT EINEM KOMMUNIKATIONSMODUL**

(30) Priorität: 15.12.2022 DE 102022213721
(71) Anmelder: Robert Bosch GmbH, 70442 Stuttgart (DE)
(72) Erfinder: Schulz, Thilo, 73230 Kirchheim (DE); Kuhlmann, Tobias, 70195 Stuttgart (DE)

(57) **Zusammenfassung**

Die Erfindung betrifft ein Elektrogerät, insbesondere ein Elektrofahrrad, mit einer eine Steuereinheit umfassenden Elektronik, wobei die Elektronik eine erste Kommunikationsschnittstelle zur drahtlosen Kommunikation aufweist, wobei das Elektrogerät ein Kommunikationsmodul aufweist, wobei das Kommunikationsmodul eine zweite Kommunikationsschnittstelle aufweist, wobei das Elektrogerät zum Austausch von Daten oder Informationen mit einem mobilen Endgerät ausgebildet ist. Es wird vorgeschlagen, dass das Kommunikationsmodul durch das mobile Endgerät deaktivierbar ausgebildet ist.

## Beschreibung

### Offenbarung der Erfindung

Die Erfindung betrifft ein Elektrogerät, insbesondere ein Elektrofahrrad, mit einer eine Steuereinheit umfassenden Elektronik, wobei die Elektronik eine erste Kommunikationsschnittstelle zur drahtlosen Kommunikation aufweist, wobei das Elektrogerät ein Kommunikationsmodul aufweist, wobei das Kommunikationsmodul eine zweite Kommunikationsschnittstelle aufweist, wobei das Elektrogerät zum Austausch von Daten oder Informationen mit einem mobilen Endgerät ausgebildet ist. Es wird vorgeschlagen, dass das Kommunikationsmodul durch das mobile Endgerät deaktivierbar ausgebildet ist. Vorteilhaft kann dadurch der Transport des Kommunikationsmoduls verbessert werden.

Das Elektrogerät ist vorzugsweise als ein batteriebetriebenes Elektrogerät ausgebildet. Insbesondere umfasst das Elektrogerät zumindest eine wechselbare Energiespeichereinheit, die vorzugsweise werkzeuglos lösbar mit einem Gehäuse des Elektrogeräts ausgebildet ist. Das Elektrogerät kann beispielsweise als eine Elektrofahrrad, als eine Handwerkzeugmaschine, als ein Haushaltsgerät, als ein Gartengerät oder dergleichen ausgebildet sein.

Unter einem Elektrofahrrad soll im Zusammenhang dieser Anmeldung insbesondere ein Fahrrad verstanden, dass eine Antriebseinheit zur Unterstützung des Fahrers aufweist. Das Elektrofahrrad ist vorzugsweise als ein eBike, ein Pedelec, ein Lastenfahrrad, ein Klappfahrrad oder dergleichen ausgebildet. Die Antriebseinheit weist einen Motor auf, der beispielsweise als ein Mittelmotor oder als ein Nabenmotor ausgebildet sein kann. Der Motor ist vorzugsweise als ein Elektromotor ausgebildet. Die Antriebseinheit ist mit einer Energieversorgungsvorrichtung zur Versorgung der Antriebseinheit mit Energie verbunden. Die Energieversorgungseinheit ist vorzugsweise als ein Akkupack ausgebildet und weist ein Akkugehäuse auf, das bevorzugt lösbar mit einem Rahmen des Fahrrads verbunden ist. Das Elektrofahrrad umfasst eine Elektronik mit einer Steuereinheit zur Steuerung oder Regelung des Elektrofahrrads. Die Elektronik umfasst vorzugsweise eine Sensoreinheit, wobei die Sensoreinheit beispielsweise Bewegungssensoren, Drehmomentsensoren, Geschwindigkeitssensoren, GPS-Sensoren, Magnetsensoren oder dergleichen aufweisen kann. Zudem umfasst die Elektronik zumindest eine Kommunikationsschnittstelle zur drahtlosen Verbindung des Elektrofahrrads mit der Steuervorrichtung und/oder dem Server.

Das mobile Endgerät kann beispielsweise als ein Laptop, als ein Smartphone, als ein Tablet oder als eine Smartwatch ausgebildet sein. Das mobile Endgerät umfasst dabei zumindest eine Kommunikationsschnittstelle, die zur ersten Kommunikationsschnittstelle und/oder zu der zweiten Kommunikationsschnittstelle des Elektrogeräts korrespondiert. Das mobile Endgerät ist derart mit dem Elektrogerät verbindbar, dass Betriebsinformationen des Elektrogeräts dem mobilen Endgerät bereitstellbar sind und/oder eine Steuerung des Elektrogeräts durch das mobile Endgerät möglich ist. Bei den Betriebsinformationen des Elektrofahrrads kann es sich beispielsweise um eine Geschwindigkeit des Elektrofahrrads, eine gefahrene Strecke des Elektrofahrrads, eine aktuelle Position des Elektrofahrrads, ein Ladezustand eines Akkupacks des Elektrofahrrads oder dergleichen handeln. Die Steuerung des Elektrofahrrads kann beispielsweise als ein Ein- oder Ausschalten eines Antriebseinheit des Elektrofahrrads, einer Einstellung eines Unterstützungsmodus der Antriebseinheit, etc. ausgebildet sein.

Die erste und die zweite Kommunikationsschnittstellen sind vorzugsweise als unterschiedliche Kommunikationsschnittstellen ausgebildet. Die Kommunikationsschnittstellen können dabei beispielsweise als eine Bluetooth-Schnittstelle, BLE-Schnittstelle, WiFi-Schnittstelle, Zigbee-Schnittstelle, Mobilfunkschnittstelle, Satelittenschnittstelle, etc. ausgebildet sein.

Unter einer Deaktivierung des Kommunikationsmoduls soll im Zusammenhang dieser Anmeldung zumindest verstanden werden, dass die zweite Kommunikationsschnittstelle des Kommunikationsmoduls derart deaktiviert wird, dass mittels der zweiten Kommunikationsschnittstelle keine Daten mehr empfangen oder gesendet werden. Insbesondere werden im Wesentlichen sämtliche elektronischen Komponenten des Kommunikationsmoduls im deaktivierten Zustand nicht mit Energie versorgt. Alternativ ist ebenso denkbar, dass die elektrischen Komponenten nur teilweise deaktiviert werden, beispielsweise nur die elektronischen Komponenten, die ein Funksignal aussenden. Das Kommunikationsmoduls kann zur Energieversorgung mit einem Energiespeicher des Elektrogeräts verbindbar ausgebildet sein und/oder eine eigene Energieversorgung aufweisen.

Des Weiteren wird vorgeschlagen, dass das Kommunikationsmodul insbesondere nur durch die erste Kommunikationsschnittstelle deaktivierbar ausgebildet ist. Vorteilhaft kann dadurch die Sicherheit des Systems erhöht werden.

Weiterhin wird vorgeschlagen, dass das Kommunikationsmodul durch die zweite Kommunikationsschnittstelle deaktivierbar ausgebildet ist. Vorteilhaft kann dadurch eine Deaktivierung auch aus größerer Entfernung zu dem Elektrogerät ermöglicht werden.

Zudem wird vorgeschlagen, dass das Kommunikationsmodul insbesondere nur durch das mobile Endgerät aktivierbar ausgebildet ist. Vorteilhaft kann dadurch die Sicherheit weiter verbessert werden. Vorzugsweise ist das mobile Endgerät als ein authentifiziertes Endgerät ausgebildet, dass für sich oder mittels einer Applikationssoftware einer Nutzer ID zugeordnet ist, wobei die Nutzer ID eine Berechtigung zur Deaktivierung aufweist.

Des Weiteren wird vorgeschlagen, dass das mobile Endgerät derart über die erste Kommunikationsschnittstelle mit dem Elektrogerät verbindbar ausgebildet ist, dass das mobile Endgerät als Steuervorrichtung für das Elektrogerät ausgebildet ist. Vorteilhaft kann dadurch die Steuerung des Elektrogeräts verbessert werden.

Weiterhin wird vorgeschlagen, dass das Kommunikationsmodul einen Positionssensor, insbesondere einen GNSS-Empfänger, aufweist. Vorteilhaft kann dadurch eine präzise Lokalisierung des mit dem Kommunikationsmodul verbundenen Elektrogeräts gewährleistet werden.

Zudem wird vorgeschlagen, dass das Kommunikationsmodul einen Bewegungssensor, insbesondere einen Beschleunigungssensor, aufweist. Vorteilhaft können dadurch Bewegungen und Vibrationen des Elektrogeräts erfasst werden.

Des Weiteren wird vorgeschlagen, dass das Kommunikationsmodul als eine Überwachungseinheit ausgebildet ist. Die Überwachungseinheit ist vorzugsweise zur Überwachung der Position und/oder Bewegung des Elektrogeräts ausgebildet.

Weiterhin wird vorgeschlagen, dass das Kommunikationsmodul elektrisch verbindbar mit der Elektronik des Elektrogeräts ausgebildet ist. Vorteilhaft kann dadurch die Sensorik und/oder die Kommunikationsmöglichkeiten des Elektrogeräts ergänzt und/oder erweitert werden. Die Verbindung kann drahtgebunden, beispielsweise über ein Kabel, oder drahtlos, beispielsweise durch eine kurzreichweitige Kommunikationsschnittstelle, erfolgen.

Zudem wird vorgeschlagen, dass das Kommunikationsmodul als eine optionale Komponente des Elektrogeräts, insbesondere als ein Zubehör, ausgebildet ist. Vorteilhaft kann dadurch das Kommunikationsmodul auch nachgerüstet werden. Das Kommunikationsmodul kann dabei von außen zugänglich oder integriert in einem Gehäuse des Elektrogeräts ausgebildet sein. Das Kommunikationsmodul kann werkzeuglos lösbar oder per Werkzeug lösbar mit dem Elektrogerät ausgebildet sein.

Des Weiteren wird vorgeschlagen, dass die erste Kommunikationsschnittstelle als eine Kurzreichweitige Kommunikationsschnittstelle, insbesondere als eine Bluetooth-Schnittstelle, und die zweite Kommunikationsschnittstelle als eine langreichweitige Kommunikationsschnittstelle, insbesondere als eine Mobilfunkschnittstelle, ausgebildet ist. Vorteilhaft kann somit eine optimale Bereitstellung von Daten gewährleistet werden. Die erste Kommunikationsschnittstelle ist insbesondere zur direkten Verbindung mit dem mobilen Endgerät ausgebildet. Die zweite Kommunikationsschnittstelle ist insbesondere zur indirekten Verbindung mit dem mobilen Endgerät ausgebildet, wobei die Verbindung über zumindest eine weitere Vorrichtung, insbesondere einen Funkmast, erfolgt.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine schematische Ansicht eines Systems, umfassend ein Elektrogerät und ein mobiles Endgerät;
Fig. 2 ein schematisches Flussdiagramm mit einem Verfahren zur Deaktivierung eines Kommunikationsmoduls des Elektrogeräts.

### Beschreibung der Ausführungsbeispiele

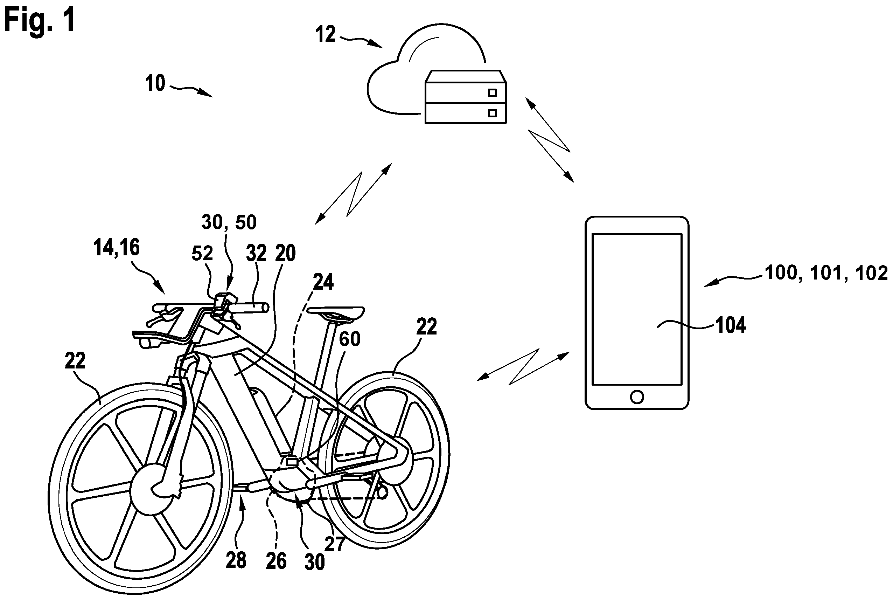

In Fig. 1 ist ein System 10 umfassend einen Server 12, ein Elektrogerät 14 und ein mobiles Endgerät 100 in einer schematischen Ansicht gezeigt.

Das Elektrogerät 14 ist beispielhaft als ein Elektrofahrrad 16 ausgebildet. Das Elektrofahrrad 16 kann beispielsweise als ein Pedelec oder als ein eBike ausgebildet sein.

Das mobile Endgerät 100 ist beispielhaft als eine Steuervorrichtung 101 für das Elektrogerät 14 ausgebildet ist. Das mobile Endgerät 100 ist zudem beispielhaft als ein Smartphone ausgebildet. Insbesondere weist das mobile Endgerät 100 ein Betriebssystem auf, das zur Ausführung diverser Applikationssoftware ausgebildet ist. Vorzugsweise weist das mobile Endgerät 100 zumindest eine Applikationssoftware auf, die zur Anzeige von Betriebsinformationen des Elektrofahrrads 16 und/oder zur Steuerung des Elektrofahrrads 16 ausgebildet ist, beispielsweise eine Fahrrad-App.

Das Elektrofahrrad 16 weist ein Gehäuse in Form eines Rahmens 20 bzw. eines Fahrradrahmens auf. Mit dem Rahmen 20 sind zwei Räder 22 verbunden. Zudem weist das Elektrofahrrad 16 einen Energieversorgungseinheit 24 in Form eines Akkupacks auf. Der Akkupack ist beispielhaft als ein Wechselakkupack ausgebildet, der werkzeuglos lösbar mit dem Elektrofahrrad 16 verbunden ist. Zudem weist das Elektrofahrrad 16 eine Antriebseinheit 26 auf, die einen Elektromotor bzw. Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist. Das Elektrofahrrad 16, insbesondere die Antriebseinheit 26 des Elektrofahrrads 16, wird über die Energieversorgungseinheit 24 mit Energie versorgt. Die Energieversorgungseinheit 24 kann von außen am Rahmen 20 befestigbar oder im Rahmen 20 integriert ausgebildet sein.

Das Elektrofahrrad 16 umfasst eine eine Steuereinheit umfassende Elektronik, die zur Steuerung oder Regelung des Elektrofahrrads 16, insbesondere des Elektromotors, ausgebildet ist. Das Elektrofahrrad 16 weist eine Tretkurbel 28 auf. Die Tretkurbel 28 weist eine Tretkurbelwelle (nicht dargestellt) auf.

Die Antriebseinheit 26 mit dem Elektromotor und der Tretkurbelwelle sind in einem mit dem Rahmen 20 verbundenen Antriebsgehäuse 27 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 26 mittels der Steuereinheit gesteuert oder geregelt wird. Die Steuereinheit ist dazu ausgebildet, die Antriebseinheit derart anzusteuern, dass der Fahrer des Elektrofahrrads 16 beim Pedalieren unterstützt wird. Vorzugsweise ist die Steuereinheit durch den Fahrer bedienbar ausgebildet, sodass der Fahrer den Unterstützungsgrad einstellen kann. Das Elektrofahrrad 16 weist beispielsweise einen leichten Unterstützungsmodus und einen starken Unterstützungsmodus auf, wobei die Antriebseinheit im starken Unterstützungsmodus eine höhere Unterstützung für den Fahrer bietet.

Die Elektronik umfasst beispielhaft ein Steuermodul 50, das an einem Lenker 32 des Elektrofahrrads 16 angeordnet ist. Alternativ ist auch eine Positionierung, beispielhaft innerhalb des Rahmens 20, vorzugsweise in einem Oberrohr des Rahmens 20, denkbar. Das Steuermodul 50 umfasst beispielhaft ein Gehäuse 52, in welchem eine Recheneinheit (nicht dargestellt), eine Speichereinheit (nicht dargestellt) und eine erste drahtlose Kommunikationsschnittstelle (nicht dargestellt) angeordnet ist. Das Steuermodul 50 ist beispielhaft über zumindest ein Kabel (nicht dargestellt) mit weiteren elektrischen Fahrradkomponenten, insbesondere dem Akkupack 24 und der Antriebseinheit 26, verbunden. Die Kabel verlaufen dabei vorzugsweise verdeckt innerhalb des Rahmens 20. Alternativ oder zusätzlich ist auch eine drahtlose Verbindung mittels der Kommunikationsschnittstelle des Steuermoduls 50 denkbar. In der Speichereinheit der Elektronik können fahrrad- und/oder nutzerspezifische Informationen gespeichert sein. Beispielhaft sind in der Speichereinheit Informationen hinsichtlich der verbauten Fahrradkomponenten, eine Fahrrad ID und eine Nutzerinformationen in Form von bevorzugten Einsatzorten des Elektrofahrrads 16 hinterlegt.

Die erste Kommunikationsschnittstelle ist beispielhaft als eine kurzreichweitige Kommunikationsschnittstelle, insbesondere als eine BLE (Bluetooth Low Energy) Schnittstelle ausgebildet. Über die erste Kommunikationsschnittstelle des Steuermoduls 50 ist das Elektrofahrrad 16 zum Austausch von Daten mit dem mobilen Endgerät 100 direkt verbindbar ausgebildet.

Zudem umfasst das Elektrogerät 14 ein Kommunikationsmodul 60. Das Kommunikationsmodul 60 ist beispielhaft im Antriebsgehäuse 27 des Elektrofahrrads 16 angeordnet, wobei auch andere Positionierungen im oder am Gehäuse des Elektrogeräts 14 denkbar sind. Das Kommunikationsmodul 60 umfasst ein Gehäuse (nicht dargestellt), in welchem elektronische Komponenten des Kommunikationsmoduls 60 aufgenommen sind. Das Kommunikationsmodul 60 umfasst eine zweite drahtlose Kommunikationsschnittstelle. Die zweite Kommunikationsschnittstelle ist beispielhaft als eine langreichweitige Kommunikationsschnittstelle, insbesondere als eine Mobilfunkschnittstelle, vorzugsweise als eine LTE, bevorzugt CAT M1 oder NB-loT, oder 5G Schnittstelle, ausgebildet. Das Kommunikationsmodul 60 ist elektrisch mit dem Elektrogerät 14, insbesondere der Elektronik und dem Akkupack, verbunden. Vorteilhaft kann durch die erste Kommunikationsschnittstelle ein Datenaustausch zwischen dem Elektrogerät 14 und mobilen Endgeräten 100 in der unmittelbaren Umgebung des Elektrogeräts 14 ermöglicht und mittels der zweiten Kommunikationsschnittstelle ein Datenaustausch mit einem Server oder einer Cloud ermöglicht werden. Das Kommunikationsmodul 60 ist vorzugsweise als optionale Fahrradkomponente oder als Zubehör ausgebildet, sodass das Elektrofahrrad 16 auch ohne das Kommunikationsmodul 60 betrieben werden kann. Das Kommunikationsmodul 60 ist beispielhaft im verbundenen Zustand der Elektronik des Elektrofahrrads 16 zugeordnet, sodass die Steuereinheit auf die elektronischen Komponenten beziehungsweise die Funktionen des Kommunikationsmoduls 60 zugreifen und verwenden kann. Alternativ ist auch denkbar, dass das Kommunikationsmodul 60 nicht mit der Elektronik des Elektrogeräts 14 verbunden ist.

Das Kommunikationsmodul 60 umfasst ferner einen Positionssensor, beispielhaft in Form eines GNSS-Empfängers. Vorteilhaft kann dadurch die Position des Elektrofahrrads 16 erfasst werden. Zudem umfasst das Kommunikationsmodul zumindest einen Bewegungssensor in Form eines Beschleunigungssensors. Insbesondere ist das Kommunikationsmodul 60 als eine Überwachungseinheit ausgebildet, sodass das Kommunikationsmodul 60 insbesondere unabhängig von der Elektronik des Elektrogeräts 14 ermitteln kann, ob eine Bewegung des Elektrogeräts 14 vorliegt und bei einer unzulässigen Bewegung die Bewegung und die Position einem Server zur Bereitstellung der Information an einen Benutzer bereitzustellen.

Zudem umfasst das Elektrofahrrad 16 eine Bedieneinheit 30 zur Bedienung des Elektrofahrrads 16. Die Bedieneinheit 30 ist an dem Lenker 32 des Elektrofahrrads 16 angeordnet. Die Bedieneinheit 30 wird beispielhaft durch das Steuermodul 50 gebildet. Die Bedieneinheit 30 weist beispielhaft einen nicht näher dargestellten Ein/Aus-Schalter auf, wobei mittels einer Betätigung des Schalters das Elektrofahrrad 16, insbesondere die Antriebseinheit 26, aktivierbar ausgebildet ist. Zudem ist die Elektronik mittels der Bedieneinheit 30 ansteuerbar ausgebildet, beispielsweise ist mittels einer Bedienung der Bedieneinheit 30 eine Auswahl eines Unterstützungsmodus des Elektrofahrrads 16 möglich.

Die Steuervorrichtung 101 ist beispielhaft als ein Smartphone 102 ausgebildet. Die Steuervorrichtung 101 umfasst eine Anzeigeeinheit 104, die zur Anzeige von Informationen ausgebildet ist. Die Anzeigeeinheit 104 ist beispielhaft als ein berührungsempfindlicher Bildschirm ausgebildet, sodass die Steuervorrichtung 101 mittels einer Betätigung beziehungsweise einer Berührung der Anzeigeeinheit 104 bedienbar und/oder steuerbar ist.

Die Steuervorrichtung 101 weist zumindest eine Fahrrad-App auf, die zur Anzeige von Betriebsinformationen des Elektrofahrrads 16 und/oder zur Steuerung des Elektrofahrrads 16 ausgebildet ist.

Die Steuervorrichtung 101 weist zumindest eine kurzreichweitige Kommunikationsschnittstelle auf, die zu der erstem Kommunikationsschnittstelle des Elektrofahrrads 16 korrespondiert. Die kurzreichweitige Kommunikationsschnittstelle ist beispielhaft als eine Bluetooth Schnittstelle ausgebildet. Die Steuervorrichtung 101 kann abhängig oder unabhängig von der Fahrrad-App eine Verbindung mit dem Elektrofahrrad 16 erstellen. Diese Verbindung erfolgt beispielhaft über einen Bluetooth Pairing Prozess. Durch den Pairing Prozess werden die Steuervorrichtung 101 und das Elektrofahrrad 16 miteinander gekoppelt und verbunden. Wird die Steuervorrichtung 101 von dem Elektrofahrrad 16 physisch getrennt, erfolgt auch eine Trennung der drahtlosen Kommunikation über die erste Kommunikationsschnittstelle, sie verbleiben allerdings im gekoppelten Zustand.

Zudem umfasst die Steuervorrichtung 101 zumindest eine langreichweitige Kommunikationsschnittstelle zur drahtlosen Kommunikation mit dem Server 12 und der zweiten Kommunikationsschnittstelle des Kommunikationsmoduls 60 des Elektrofahrrads 16. Die langreichweitige Kommunikationsschnittstelle ist beispielhaft als eine 5G-Schnittstelle ausgebildet.

Beispielhaft umfasst die auf dem mobilen Endgerät 100 installierte Fahrrad-App eine Deaktivierungsfunktion für das Kommunikationsmodul 60 des Elektrofahrrads 16. Bei einer Betätigung der Deaktivierungsfunktion durch einen Benutzer der Fahrrad-App, wir das Kommunikationsmodul 60 derart aktiviert, dass sämtliche Sensorik und die zweite Kommunikationsschnittstelle ausgeschaltet sind und somit weder Daten erfasst noch gesendet und empfangen werden können. Vorteilhaft kann dadurch ein sicherer Transport in sensiblen Umgebungen sichergestellt oder Fehlfunktionen im Zusammenhang mit den Daten des Kommunikationsmoduls 60 vermieden werden.

Beispielhaft ist das Elektrogerät 14 dabei derart ausgebildet, dass eine Aktivierung und/oder Deaktivierung des Kommunikationsmoduls 60 durch einen Benutzer nicht durch das Elektrogerät 14 beziehungsweise die Steuereinheit des Elektrogeräts 14 allein erfolgt, sondern ausschließlich durch ein drahtlos mit dem Elektrofahrrad 16 verbundenes mobiles Endgerät. Vorteilhaft kann dadurch ein ungewolltes Eingreifen in die durch das Kommunikationsmodul 60 bereitstellbaren Funktionen vermieden werden.

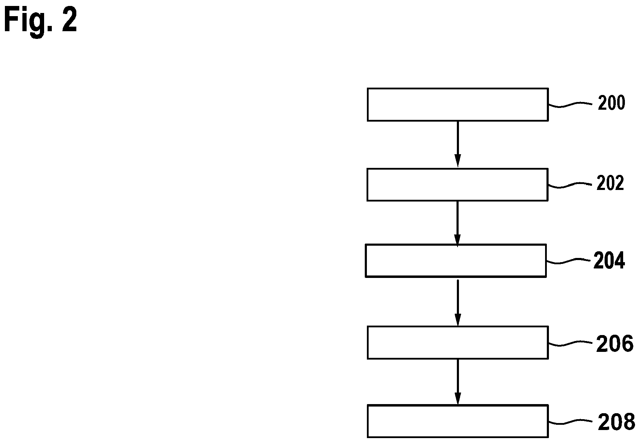

In Figur 2 ist ein Flussdiagramm mit einem beispielhaften Verfahren zur Deaktivierung des Kommunikationsmoduls 60 gezeigt.

In einem ersten Schritt 200 erfolgt eine Verbindung des Kommunikationsmoduls 60 mit der Elektronik des Elektrofahrrads 16. Im verbundenen Zustand können Daten zwischen dem Kommunikationsmodul 60 und der Elektronik des Elektrofahrrads 16 einseitig oder beidseitig gesendet und/oder empfangen werden. Die Verbindung erfolgt beispielhaft über eine Kabelverbindung.

In einem zweiten Schritt 202 erfolgt eine Kopplung und Verbindung des mobilen Endgeräts 100 mit dem Elektrofahrrad 16 mittels der ersten Kommunikationsschnittstelle des Elektrofahrrads 16. Die Kopplung erfolgt beispielhaft über einen Pairing Prozess, wobei im gekoppelten Zustand die Geräte einander bekannt sind und im verbundenen Zustand ein Datenaustausch erfolgen kann.

In einem weiteren Schritt 204 erfolgt im gekoppelten oder verbundenen Zustand eine Installation einer für das Elektrofahrrad 16 vorgesehenem Fahrrad-App. Durch die Fahrrad-App können auf dem mobilen Endgerät 100 während der Benutzung des Elektrogeräts 14 Betriebsinformationen des Elektrogeräts 14 angezeigt werden, beispielsweise eine aktuelle Geschwindigkeit oder Navigationsinformationen. Zudem können durch die Fahrrad-App auch Funktionen des Elektrofahrrads 16, beispielsweise ein Unterstützungsmodus des Elektrofahrrads 16, eingestellt werden.

In einem weiteren Schritt 206 wird eine Überwachungsfunktion in der Fahrrad-App aktiviert. Ist die Überwachungsfunktion aktiviert, werden die Daten des ersten Kommunikationsmoduls 60, insbesondere Bewegungsdaten und Positionsdaten, erfasst und abhängig von deren Relevanz an den Server 12 direkt über das Kommunikationsmodul 60 und ohne das mobile Endgerät 100 gesendet.

In einem weiteren Schritt 208 erfolgt eine Deaktivierung des Kommunikationsmoduls 60 durch das mobile Endgerät 100, insbesondere durch die auf dem mobilen Endgerät 100 installierte Fahrrad-App. Im deaktivierten Zustand werden seitens des Elektrofahrrads 16 keine Daten direkt an den Server gesendet.

Zur Aktivierung des Kommunikationsmoduls 60 kann durch das mobile Endgerät 100 über die erste Kommunikationsschnittstelle des Elektrofahrrads 16 ein Aktivierungsbefehl bereitgestellt werden, wodurch die Steuereinheit des Elektrofahrrads 16 das Kommunikationsmodul, insbesondere die zweite Kommunikationsschnittstelle, den Bewegungssensor und den GNSS-Empfänger, aktiviert.

## Patentansprüche

1. Elektrogerät, insbesondere Elektrofahrrad (16), mit einer eine Steuereinheit umfassenden Elektronik, wobei die Elektronik eine erste Kommunikationsschnittstelle zur drahtlosen Kommunikation aufweist, wobei das Elektrogerät (14) ein Kommunikationsmodul (60) aufweist, wobei das Kommunikationsmodul (60) eine zweite Kommunikationsschnittstelle aufweist, wobei das Elektrogerät (14) zum Austausch von Daten oder Informationen mit einem mobilen Endgerät (100) ausgebildet ist,
**dadurch gekennzeichnet, dass**
das Kommunikationsmodul (60) durch das mobile Endgerät (100) deaktivierbar ausgebildet ist.

2. Elektrogerät nach Anspruch 1, **dadurch gekennzeichnet, dass** das Kommunikationsmodul (60) insbesondere nur durch die erste Kommunikationsschnittstelle deaktivierbar ausgebildet ist.

3. Elektrogerät nach einem der vorhergehenden Ansprüche, **dadurch gekennzeichnet, dass** das Kommunikationsmodul (60) durch die zweite Kommunikationsschnittstelle deaktivierbar ausgebildet ist.

4. Elektrogerät nach einem der vorhergehenden Ansprüche, **dadurch gekennzeichnet, dass** das Kommunikationsmodul (60) durch das mobile Endgerät (100) aktivierbar ausgebildet ist.

5. Elektrogerät nach einem der vorhergehenden Ansprüche, **dadurch gekennzeichnet, dass** das mobile Endgerät (100) derart über die erste Kommunikationsschnittstelle mit dem Elektrogerät (14) verbindbar ausgebildet ist, dass das mobile Endgerät (100) als Steuervorrichtung (101) für das Elektrogerät (14) ausgebildet ist.

6. Elektrogerät nach einem der vorhergehenden Ansprüche, **dadurch gekennzeichnet, dass** das Kommunikationsmodul (60) einen Positionssensor, insbesondere einen GNSS-Empfänger, aufweist.

7. Elektrogerät nach einem der vorhergehenden Ansprüche, **dadurch gekennzeichnet, dass** das Kommunikationsmodul (60) einen Bewegungssensor, insbesondere einen Beschleunigungssensor, aufweist.

8. Elektrogerät nach einem der vorhergehenden Ansprüche, **dadurch gekennzeichnet, dass** das Kommunikationsmodul (60) als eine Überwachungseinheit ausgebildet ist.

9. Elektrogerät nach einem der vorhergehenden Ansprüche, **dadurch gekennzeichnet, dass** das Kommunikationsmodul (60) elektrisch verbindbar mit der Elektronik des Elektrogeräts (14) ausgebildet ist.

10. Elektrogerät nach einem der vorhergehenden Ansprüche, **dadurch gekennzeichnet, dass** das Kommunikationsmodul (60) als eine optionale Komponente des Elektrogeräts (14), insbesondere als ein Zubehör, ausgebildet ist.

11. Elektrogerät nach einem der vorhergehenden Ansprüche, **dadurch gekennzeichnet, dass** die erste Kommunikationsschnittstelle als eine Kurzreichweitige Kommunikationsschnittstelle, insbesondere als eine Bluetooth-Schnittstelle, und die zweite Kommunikationsschnittstelle als eine langreichweitige Kommunikationsschnittstelle, insbesondere als eine Mobilfunkschnittstelle, ausgebildet ist.
